# EUROPÄISCHE PATENTSCHRIFT

(11) **EP 1 195 314 B1**
(45) Veröffentlichungstag und Bekanntmachung des Hinweises auf die Patenterteilung: **09.06.2010**
(21) Anmeldenummer: 01121902.9
(22) Anmeldetag: 12.09.2001
(51) Int. Cl.: B62D 15/02

(54) **Vorrichtung zur Ermittlung des Lenkwinkels bei Fahrzeugen**
Device for determining the steering angle with vehicles
Appareil pour déterminer l'angle de braquage pour véhicules

(30) Priorität: 06.10.2000 DE 10049989
(43) Veröffentlichungstag der Anmeldung: 10.04.2002
(73) Patentinhaber: CLAAS Industrietechnik GmbH, 33106 Paderborn (DE)
(72) Erfinder: König, Ralf, 33428 Harsewinkel (DE)

(56) Entgegenhaltungen:
- EP-A- 0 895 923
- WO-A-99/59861
- DE-A1- 19 635 159

## Beschreibung

Die Erfindung betrifft eine Vorrichtung zur Ermittlung des Lenkwinkels zwischen den schwenkbar am Gabelkopf einer Fahrzeugachse gelagerten Achsschenkels eines Achsschenkels und dem Gabelkopf mittels eines Drehwinkelgebers, bestehend aus einem äußeren Gehäusemantel und einem inneren in diesem verdrehbaren Kernteil, wobei ein Teil mit dem Achsschenkel und der andere Teil mit dem Gabelkopf verbunden ist, wobei die Verbindung über eine Ausgleichs kupplung erfolgt.

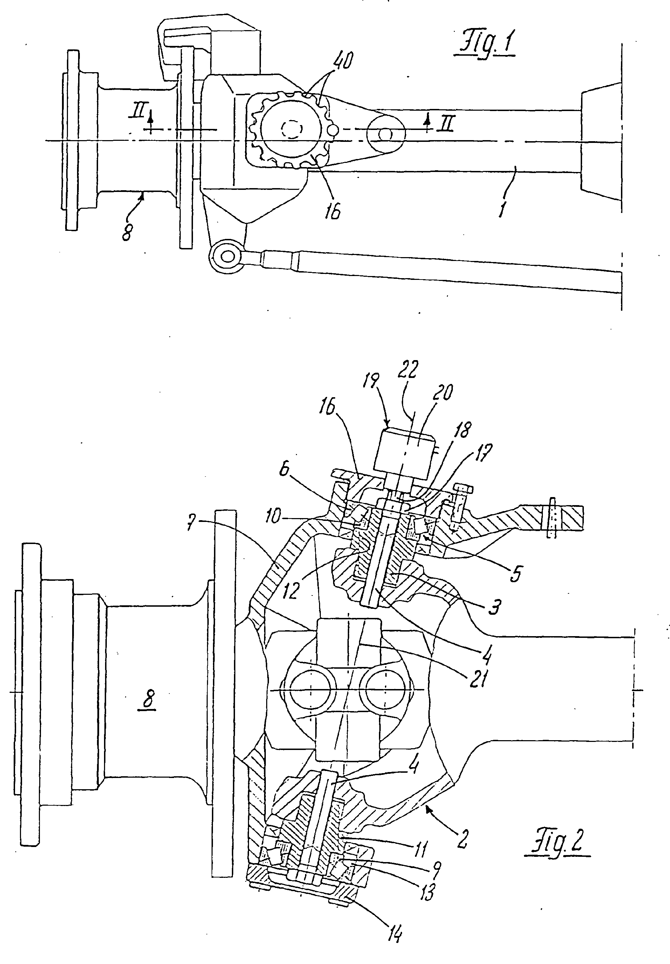

Eine aus der der Praxis bekannte Vorrichtung zeigt beispielsweise die Figur 2. Dabei ist mit 1 der linke endseitige Teil einer Fahrzeugachse bezeichnet, der einen Gabelkopf 2 trägt. In diesen Gabelkopf 2 sind einander diametral gegenüberliegend zwei Lagerbolzen 3 mittels Befestigungsschrauben 4 fest eingeschraubt. Auf die dem Gabelkopf abgewandten Enden der Lagerbolzen 3 sind Kegelrollenlager 5 aufgesetzt, deren äußere Lagerringe 6 in Durchgangsbohrungen des gabelförmigen Endes 7 des Achsschenkels 8 eingesetzt sind. Die inneren Lagerringe 9 und 10 der beiden Kegelrollenlager 5 stützen sich jeweils auf einem Bund 11, 12 der Lagerbolzen 3 ab. Die in Figur 2 untere Durchgangsbohrung 13 ist mittels eines Deckels 14 verschlossen, in den sich der äußere Lagerring 6 des unteren Kegelrollenlagers 5 abstützt. In die obere Durchgangsbohrung 15 ist ein Innengewinde eingeschnitten, in das ein Lagerdeckel 16 eingeschraubt ist, durch welchen das Kegelrollenlager5 zwecks spielfreier Lagerung vorgespannt ist. Der Schraubenkopf 17 der oberen Befestigungsschraube 4 ist geschlitzt. In diesen Schlitz greift der als Stecker 18 ausgebildete Teil des inneren Kernes eines Potentiometers 19 ein, dessen äußeres Gehäuse 20 mit dem Schraubdeckel 16 drehfest verbunden ist. Im Idealfall fluchtet die Drehachse des Steckerteiles 18 des Potentiometers 19 mit der Achse 21, um die der Achsschenkel 8 verschwenkt werden kann. Es hat sich aber herausgestellt, dass durch das Einschrauben des Lagerdeckels 16 zum Verspannen des Kegelrollenlagers 5 geringfügige Verformungen am Gabelkopf 2 der Fahrzeugachse 1 auftreten. Diese Verformungen können sich in Form von Winkelverlagerungen oder Querverschiebung der Achsen 21 und 22 darstellen. Nur wenige Zehntelmillimeter reichen aus, um nach geringer Betriebsdauer das Potentiometer wegen Unflucht der Achsen zu zerstören.

Die EP 0 895 923 A1 offenbart eine gattungsgemäße Winkelaufnahmeeinheit zum Detektieren des Schwenkwinkels eines Achsschenkels um eine stationäre Achsschenkelachse des Fahrzeugs herum. Um eine Unempfindlichkeit für Ausrichtfehler der Sensoranordnung gegenüber der Achsschenkelachse zu erreichen, ist zwischen dem Sensor und dem Achsschenkel eine Kupplung angeordnet. Die Kupplung besteht aus einem kronenförmigen Kupplungsorgan und einem Befestigungsorgan, welche mittels eines Stiftes verbindbar sind. Nachteilig an einer derart bekannten Kupplung für eine Winkelaufnahmeeinheit ist es, dass das kronenförmige Kupplungsorgan eine sehr komplexe Formgebung aufweist, was die Herstellung entsprechend verkompliziert und somit teuer macht. Zusätzlich benötigt ein derartiger Kupplungsaufbau insbesondere in der Höhe einen großen Montageraum, welcher an Fahrzeugachsen in der Regel nicht zur Verfügung steht.

Der vorliegenden Erfindung liegt daher die Aufgabe zugrunde, eine Vorrichtung zur Ermittlung des Lenkwinkels eines Fahrzeuges der eingangs näher bezeichneten Art so auszubilden, dass sie robust ausgebildet ist und auch nach längerer Einsatzdauer einwandfrei funktioniert.

Diese Aufgabe wird dadurch gelöst, dass die Kupplung aus zwei flach aufeinander liegenden, gegeneinander verschwenkbaren Scheiben besteht, die miteinander außermittig durch einen Stift verbunden sind, wobei eine der beiden Scheiben fest mit dem Gabelkopf der Achse verbunden ist. Eine solche Ausgleichskupplung ist in der Lage, Winkelverlagerungen und Querverschiebungen, die durch die Montage entstehen, aufzunehmen. Dabei besteht die Kupplung aus zwei flach aufeinander liegenden, gegeneinander verschwenkbaren Scheiben, die miteinander außermittig durch einen Stift verbunden sind. Die Verstiftung erfolgt dabei so, dass die Möglichkeit der Verschwenkbarkeit der Scheiben gegeneinander nicht beeinträchtigt wird.

In weiterer Ausgestaltung der Erfindung weist die auf der fest mit dem Gabelkopf verbundenen Scheibe aufliegende Scheibe eine Aufnahme auf zwecks formschlüssiger Verbindung mit dem aus dem Gehäuse des Drehwinkelgebers vorragenden inneren Teils. Konstruktiv zweckmäßig ist es, eine der Scheiben mittels einer Schraube fest gegen die Stirnfläche eines Lagerbolzens zu pressen, der mit dem Gabelkopf lagesichernd verschraubt ist. Die außermittig mit der mit dem Gabelkopf verbundenen Scheibe verstiftete andere Scheibe weist auf ihrer planen Oberfläche einen zentralen geschlitzten Ansatz auf, wobei in den Schlitz der als Flachstecker ausgebildete aus dem Drehwinkelgebergehäuse vorragende Bereich des Drehwinkelgeberkernteils eingeführt ist. DerSchlitz ist auf den Verbindungsstitf so ausgerichtet, dass die Mittellinie des Schlitzes die Mittelachse des Stiftes schneidet In Anlehnung an bewährte Konstruktionen aus der Praxis sind der Achsschenkel und der Gabelkopf mittels eines über einen Schraubdeckel verspannten Lagers miteinander verbunden. Dabei ist außen an dem Schraubdeckel der Gehäusemantel des Drehwinkelgebers befestigt, wobei der aus diesem vorragende Flachstecker des Kernteils durch eine zentrale Bohrung imSchraubdeckel nach innen ragend in den Schlitz des Ansatzes der verstifteten Scheibe eingreift. Um zu vermeiden, dass die beiden Scheiben der Ausgleichskupplung bei Versatz gegeneinander ungenügend Bewegungsfreiheit haben, umgreift der Schraubdeckel beide Scheiben der Ausgleichskupplung mit genügend Spiel.

Es empfiehlt sich, das Gehäuse des Drehwinkelgebers an einem Deckel zu befestigen, der eine zentrale Bohrung aufweist, durch die der aus dem Drehwinkelgeber hervorragende Steckerteil hindurchgeführt ist, wobei der Deckel mit dem Schraubdeckel lösbar verbunden ist. Eine solche Ausführung hat den Vorteil, dass die Vorspannung des Kegelrollenlagers durch den Schraubdeckel erfolgen kann, ohne dass die Gefahr besteht, den Drehwinkelgeber zu beschädigen, weil dieser bei einer solchen Ausführung der Erfindung erst nach genügendem Vorspannen des Kegelrollenlagers montiert werden kann. Der Drehwinkelgeber selbst ist zweckmäßigerweise ein Potentiometer. Alternativ dazu ist der Einsatz von Inkrementalwertaufnehmern eben so gut möglich

Im folgenden soll die Erfindung anhand der Figuren 1, 3 und 4 insoweit beschrieben werden, als sie sich von dem Ausführungsbeispiel nach dem Stand der Technik gemäß Figur 2 unterscheidet.

Es zeigen:
Fig. 1 - Eine Draufsicht auf eine Gelenkverbindung zwischen einem Achsschenkel und einem Achs-Gabelkopf.
Fig. 2 - Einen Schnitt nach der Linie II-II in der Fig. 1
Fig. 3 - Die obere Gabelgelenkstelle nach dem Schnittverlauf wie Fig. 2 mit den erfinderischen Merkmalen.
Fig. 4 - Eine Ansicht entsprechend der Linie IV - IV in der Fig. 3

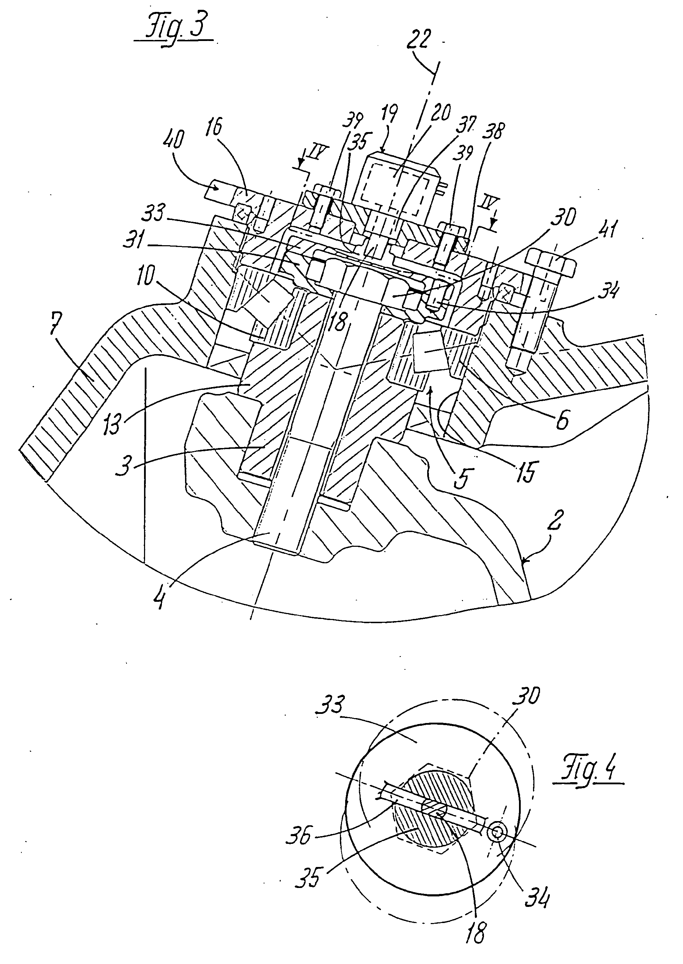

Wie im Falle der Figur 2 wird auch gemäß Figur 3 ein Lagerbolzen 3 mit dem Gabelkopf 2 fest verschraubt. Abweichend von der Ausführungsform nach Figur 2 wird der Lagerbolzen 3 vom Kopf 30 der Befestigungsschraube 4 unter Zwischenlage einer Scheibe 31 in die Sacklochbohrung 32 des Gabelkopfes 2 eingeschraubt. Die Scheibe 31 wird zwischen dem Lagerbolzen 3 und dem Schraubenkopf 30 verspannt und bildet eine untere Kupplungsscheibe. Auf diese Scheibe 31 aufgelegt ist eine obere Kupplungsscheibe 33 die mit der unteren 31 über einen Stift 34 außermittig verbunden ist; derart, dass eine Relativbewegung zwischen den beiden Kupplungsscheiben 31 und 33 möglich ist. Die obere Kupplungsscheibe 33 weist einen nach oben vorstehenden geschlitzten Ansatz 35 auf, in den ein entsprechend ausgebildeter Stecker 18 eingeführt ist. Der Schlitz 36 im Ansatz 35 ist auf den Verbindungsstift 34 so ausgerichtet, dass die Mittellinie des Schlitzes 36 die Mittelachse des Stiftes 34 schneidet. Das Steckerteil 18 ist die Verlängerung des inneren drehbaren Kernteiles des Potentiometers 19. Das Gehäuse 20 des Potentiometers 19 weist einen Bund 37 auf, über den es mit dem Deckel 38 drehfest verbunden ist. Dieser Deckel 38 wiederum ist auf dem Schraubdeckel 16 an Langlöchern geführt über Schrauben 39 um die Achse 22 drehbar bzw. einstellbar angeordnet, um die Basiseinstellung des Potentiometers 19 bei Bedarf vornehmen zu können. In an sich bekannter Weise ist der Schraubdeckel 16 in die Aufnahmebohrung 15 des Achsschenkels 8 zum Zwecke der Vorspannung des Kegelrollenlagers 5.eingeschraubt. Der Schraubdeckel 16 umfaßt die beiden Kupplungsscheiben 31 und 33 mit soviel Spiel, dass ein möglicher Versatz der Kupplungsscheiben 31 und 33 gegeneinander nicht behindert wird. Wie insbesondere deutlich der Figur 1 zu entnehmen ist, weist der Schraubdeckel 16 an seinem äußeren Umfang eine Vielzahl von Ausnehmungen 40 auf, so dass die jeweilige Drehstellung des Schraubdeckels 16 durch eine Schraube 41 gesichert werden kann.

### Bezugszeichenliste

- 1: Fahrzeugachse
- 2: Gabelkopf
- 3: Lagerbolzen
- 4: Befestigungsschrauben
- 5: Kegelrollenlager
- 6: Lagerring
- 7: Ende
- 8: Achsschenkel
- 9: Innerer Ring
- 10: Innerer Ring
- 11: Bund
- 12: Bund
- 13: Durchgangsbohrung
- 14: Deckel
- 15: Durchgangsbohrung
- 16: Lagerdeckel
- 17: Schraubenkopf
- 18: Stecker
- 19: Potentiometer
- 20: Gehäuse
- 21: Achse
- 22: Achse

- 30: Kopf
- 31: Kupplungsscheibe
- 32: Sacklochbohrung
- 33: Kupplungsscheibe
- 34: Stift
- 35: Geschlitzter Ansatz
- 36: Schlitz
- 37: Bund
- 38: Deckel
- 39: Schrauben
- 40: Ausnehmungen
- 41: Schrauben

## Patentansprüche

1. Vorrichtung zur Ermittlung des Lenkwinkels zwischen dem schwenkbar am Gabelkopf (2) einer Fahrzeugachse (1) gelagerten Achsschenkel (8) eines Achsschenkels und dem Gabelkopf (2) mittels eines Drehwinkelgebers bestehend aus einem äußeren Gehäusemantel und einem im inneren in diesem verdrehbaren Kernteil, wobei ein Teil mit dem Achsschenkel (8) und der andere Teil mit dem Gabelkopf (2) verbunden ist, wobei die Verbindung über eine Ausgleichskupplung erfolgt
**dadurch gekennzeichnet, dass**
die Kupplung aus zwei flach aufeinander liegenden, gegeneinander verschwenkbaren Scheiben ((31) und (33)) besteht, die miteinander außermittig durch einen Stift (34) verbunden sind, wobei eine der beiden Scheiben (31) fest mit dem Gabelkopf (2) der Achse (1) verbunden ist.

2. Vorrichtung nach Anspruch 1, **dadurch gekennzeichnet, dass** die auf der fest mit dem Gabelkopf (2) verbundenen Scheibe (31) aufliegende Scheibe (33) eine Aufnahme (35) aufweist zwecks formschlüssiger Verbindung mit dem aus dem Gehäuse (20) des Drehwinkelgebers (19) vorragenden inneren Steckerteil (18).

3. Vorrichtung nach einem oder mehrerer der Ansprüche 1 bis 2, **dadurch gekennzeichnet, dass** eine der Scheiben (31,33), und zwar die untere (31) mittels eines Schraube (4) fest gegen die Stirnfläche eines Lagerbolzens (3) gepresst ist, der mit dem Gabelkopf (2) lagesichernd verschraubt ist.

4. Vorrichtung nach einem oder mehrerer der Ansprüche 1 bis 3, **dadurch gekennzeichnet, dass** die außermittig mit der mit dem Gabelkopf (2) verbundenen unteren Kupplungsscheibe (31) verstiftete Kupplungsscheibe (33) einen zentralen geschlitzten Ansatz (35) aufweist und in den Schlitz (36), der als Flachstecker (18) ausgebildete, aus dem Drehwinkelgebergehäuse (20) vorragende Bereich des Drehwinkelgeberkernteils eingeführt ist.

5. Vorrichtung nach Anspruch 4, **dadurch gekennzeichnet, dass** der Achsschenkel (8) und der Gabelkopf (2) mittels eines über einen Schraubdeckel (16) verspannten Lagers (5) miteinander verbunden sind, wobei außen auf dem Schraubdeckel (16) der Gehäusemantel (20) des Drehwinkelgebers (19) befestigt ist und der aus diesem vorragende Flachsteckteil (18) durch eine zentrale Bohrung im Schraubdeckel (16) nach innen ragend in den Schlitz (36) des Ansatzes (35) der oberen Scheibe (33) eingreift.

6. Vorrichtung nach einem oder mehrerer der Ansprüche 4 bis 5, **dadurch gekennzeichnet, dass** der Schraubdeckel (16) beide Teile der Ausgleichskupplung (Scheiben (31) und (33)) mit Spiel umgreift.

7. Vorrichtung nach einem oder mehrerer der Ansprüche 4 bis 6, **dadurch gekennzeichnet, dass** der Gehäusemantel (20) an einem Deckel (16) befestigt ist, der eine zentrale Bohrung aufweist

8. Vorrichtung nach einem oder mehrerer der Ansprüche 1 bis 7, **dadurch gekennzeichnet, dass** der Drehwinkelgeber (99) ein Potentiometer ist.

## Claims

1. Apparatus for ascertaining the steering angle between the stub axle (8) of a stub axle, that is mounted pivotably to the fork head (2) of a vehicle axle (1), and the fork head (2), by means of a rotary angle sender comprising an outer casing shell and a core portion rotatable therein in the interior thereof, wherein one part is connected to the stub axle (8) and the other part to the fork head (2), wherein the connection is made by way of a compensating coupling,
**characterised in that**
the coupling comprises two discs ((31) and (33)) which bear flat against each other and which are pivotable relative to each other and which are connected together eccentrically by a pin (34), wherein one of the two discs (31) is fixedly connected to the fork head (2) of the axle (1).

2. Apparatus according to claim 1 **characterised in that** the disc (33) bearing against the disc (31) fixedly connected to the fork head (2) has a receiving means (35) for the purposes of connection in positively locking relationship to the inner plug part (18) projecting out of the casing (20) of the rotary angle sender (19).

3. Apparatus according to one or more of claims 1 and 2 **characterised in that** one of the discs (31, 33) and more specifically the lower disc (31) is pressed firmly by means of a screw (4) against the end face of a mounting bolt (3) which is screwed to the fork head (2) in position-securing relationship.

4. Apparatus according to one or more of claims 1 to 3 **characterised in that** the coupling disc (33) pin-connected eccentrically to the lower coupling disc (31) connected to the fork head (2) has a central slotted projection (35) and the region of the rotary angle sender core portion which is in the form of a flat plug (18) and which projects out of the rotary angle sender casing (20) is introduced into the slot (36).

5. Apparatus according to claim 4 **characterised in that** the stub axle (8) and the fork head (2) are connected together by means of a bearing (5) braced by way of a screw cover (16), wherein the casing shell (20) of the rotary angle sender (19) is fixed externally on the screw cover (16) and the flat plug (18) projecting therefrom engages projecting inwardly through the central bore in the screw cover (16) into the slot (36) in the projection (35) of the upper disc (33).

6. Apparatus according to one or more of claims 4 and 5 **characterised in that** the screw cover (16) embraces both parts of the compensating coupling (discs (31) and (33)) with clearance.

7. Apparatus according to one or more of claims 4 to 6 **characterised in that** the casing shell (20) is fixed to a cover (16) having a central bore.

8. Apparatus according to one or more of claims 1 to 7 **characterised in that** the rotary angle sender (19) is a potentiometer.

## Revendications

1. Dispositif pour déterminer l'angle de braquage entre la fusée (8) d'une fusée de roue montée pivotante sur la tête de fourche (2) d'un essieu de véhicule (1) et la tête de fourche (2), au moyen d'un capteur de position angulaire constitué d'une enveloppe de boîtier extérieure et d'un élément formant noyau pouvant être mis en rotation à l'intérieur de celle-ci, un élément étant relié à la fusée (8) et l'autre élément à la tête de fourche (2), la liaison étant établie par un accouplement compensateur,
**caractérisé par le fait que** l'accouplement se compose de deux disques ((31) et (33)) appliqués à plat l'un contre l'autre, qui peuvent pivoter l'un par rapport à l'autre et qui sont reliés entre eux de façon excentrée par une broche (34), l'un des deux disques (31) étant lié solidement à la tête de fourche (2) de l'essieu (1).

2. Dispositif selon la revendication 1, **caractérisé par le fait que** le disque (33) appliqué sur le disque (31) lié solidement à la tête de fourche (2) présente un élément de réception (35) destiné à établir une liaison par complémentarité de formes avec l'élément enfichable (18) intérieur qui fait saillie à partir du boîtier (20) du capteur de position angulaire (19).

3. Dispositif selon une ou plusieurs des revendications 1 à 2, **caractérisé par le fait que** l'un des disques (31, 33), à savoir le disque inférieur (31), est pressé à l'aide d'une vis (4) fermement contre la face frontale d'un tourillon (3) qui est vissé à la tête de fourche (2) de façon à maintenir la position.

4. Dispositif selon une ou plusieurs des revendications 1 à 3, **caractérisé par le fait que** le disque d'accouplement (33), qui est goupillé de façon excentrée au disque d'accouplement (31) inférieur lié à la tête de fourche (2), présente une partie saillante (35) centrale fendue, et la partie du noyau du capteur de position angulaire qui dépasse du boîtier (20) de capteur angulaire et est réalisée sous forme de connecteur plat (18) est introduite dans la fente (36).

5. Dispositif selon la revendication 4, **caractérisé par le fait que** la fusée (8) et la tête de fourche (2) sont reliées entre elles au moyen d'un palier (5) serré par un couvercle fileté (16), l'enveloppe de boîtier (20) du capteur de position angulaire (19) étant fixée à l'extérieur sur le couvercle fileté (16), et le connecteur plat (18), qui dépasse de ladite enveloppe, pénétrant à l'intérieur à travers un trou central, ménagé dans le couvercle fileté (16), et dans la fente (36) de la partie saillante (35) du disque supérieur (33).

6. Dispositif selon une ou plusieurs des revendications 4 à 5, **caractérisé par le fait que** le couvercle fileté (16) entoure avec du jeu les deux parties de l'accouplement compensatoire (disques (31) et (33)).

7. Dispositif selon une ou plusieurs des revendications 4 à 6, **caractérisé par le fait que** l'enveloppe de boîtier (20) est fixée à un couvercle (16) qui présente un trou central.

8. Dispositif selon une ou plusieurs des revendications 1 à 7, **caractérisé par le fait que** le capteur de position angulaire (19) est un potentiomètre.
